# EUROPEAN PATENT SPECIFICATION

(11) **EP 1 416 784 B1**
(45) Date of publication and mention of the grant of the patent: **05.12.2007**
(21) Application number: 02738493.2
(22) Date of filing: 20.06.2002
(51) Int. Cl.: A01B 17/00

(54) **IMPROVED PLOUGH BODY ASSEMBLY**
VERBESSERTER PFLUGKÖRPER
ENSEMBLE CORPS DE CHARRUE AMELIORE

(30) Priority: 15.08.2001 GB 0119901
(43) Date of publication of application: 12.05.2004
(73) Proprietor: Kverneland ASA, 4344 Kvernaland (NO)
(72) Inventor: SKJAEVELAND, Magne, N-4344 Kvernaland (NO)
(74) Representative: Raynor, Simon Mark
(86) International application number: PCT/IB2002/002403
(87) International publication number: WO 2003/015495

(56) References cited:
- WO-A-93/17540
- DE-C- 242 985
- DE-C- 248 356
- DE-C- 852 918
- DE-C- 886 231
- GB-A- 263 134

## Description

This invention relates to an improved plough body assembly.

A plough body assembly is usually mounted on a plough frame, and is pulled through the ground by a tractor so as to form a furrow, and to turn over a slice of soil at the same time. A number of plough bodies are mounted on the frame, with spacing apart from each other, both longitudinally and laterally with respect to the ploughing direction, so that each turned-over slice formed by one plough body falls into an adjacent furrow formed by another plough body. A typical plough body assembly comprises a mould board which forms the turn-over slice, and a saddle and share which form the furrow. A point (usually a reversible point) and a share knife may also be provided to assist the formation of the slice and the furrow.

It is also usual to provide a landside, and its function is to stabilise the plough body assembly laterally against the unploughed land area i.e. against the side wall of the furrow as it is being formed.

During normal ploughing, the plough body has to work the unploughed soil, and this may involve handling straw stubble, as well as manure sometimes, and the plough body therefore has to work the soil and also bury manure, straw and trash at the same time. It is therefore usual also to provide the plough body assembly with further working components, including a coulter e.g. a disc coulter, a skimmer and a trashboard.

Evidently, with a longitudinally and laterally staggered arrangement of plough bodies on a plough frame, an obliquely extending space is defined between the trailing end of one forwardly located plough body and the leading end of an adjacent rearwardly located plough body. This obliquely extending space defines a passage for movement of material in order to fill a furrow. Furthermore, given that soil and other material turned over by the rearwardly located plough body must move through this passage in order to fill the furrow formed by the forward plough body, the design and arrangement of the plough bodies must leave a sufficient space to permit free movement of the turned over material, (straw, manure, stubble, weeds, trash and soil).

Bearing in mind that the additional components (disc coulter, skimmer and trash board) of any particular plough body take up some of the space between adjacent plough bodies, these components offer resistance to free movement of material, and therefore it is often the case that some of the material (especially straw) becomes entangled with one or more of these components, and possibly also with the parts of the plough body assembly e.g. a plough beam. This has two disadvantages. First of all, there is an obstacle to free movement of turned-over material to fill the furrow, and consequently an unacceptable ploughing operation. Secondly, it is necessary for the driver to stop ploughing, from time to time, in order to unclog the space or passage, and which is time consuming, and of course interrupts the plough operation.

Therefore, with a view to preventing unacceptable obstruction to free movement of material through the space between successive plough bodies, at present the only remedy is to increase the spacing apart of the plough bodies lengthwise of the plough frame. This of course results in increase in the overall length of the plough body assembly (and therefore movement rearwardly of the overall centre of gravity), and which makes the assembly more difficult to handle and manoeuvre, and also imposes a greater power requirement to lift the assembly out of the ground i.e. (1) as the assembly approaches the usual headland, and (2) also to reverse the plough bodies in the case of a reversible plough. It is also known from our WO9317540 to increase the lateral spacing between successive plough bodies (see Figure 3), with a view to facilitate the free movement of material, but this has not resulted in a satisfactory solution, and also increases the turning effort to reverse the plough bodies when a reversible plough is involved.

The present invention therefore seeks to provide an improved plough body assembly, which seeks to minimise obstruction to the free movement of material through the space between successive plough bodies on a plough frame, but without requiring the overall length of the plough to be increased.

It is known from GB 263134A to provide a plough having a mouldboard and share, and provided with a skim attachment mounted on the plough forwardly of the share. The skim attachment comprises a first and lower plate extending in a vertical plane, and on which is mounted a separate skim attachment by means of a bracket. The plough body also includes a sole plate. The two part skim attachment serves to slice the top surface of the soil, and also turn the sliced off portion over by a breast plate forming part of the attachment and deposited into the furrow formed by the mouldboard.

It is also known from DE 248356 to provide a skim attachment mounted forwardly of a mouldboard. The skim attachment also serves to slice the soil and turn it over, in advance of the following mouldboard.

According to the invention there is provided a plough body assembly which comprises:
a plough beam for mounting the assembly on a plough frame;
a mouldboard mounted on the plough beam via a saddle;
a share mounted on the mouldboard; and,
a landside mounted on the plough beam, also via the saddle, and operative to stabilise or position the plough body assembly during ploughing;
a two-part blade mounted on the landside and formed by a forward portion which projects forwardly of the share, and a rearward portion which extends rearwardly of the forward portion, in which the forward portion has a first part which extends upwardly of the share, and a second part which is connected to the upper end of the first part and which extends rearwardly towards the mouldboard:
characterised in that the rearward portion of the blade terminates in a rear end which is mounted on a lower end of the saddle.

Preferred features of the invention are set out in dependent claims 2 to 6.

In a plough body according to the invention, the forward portion of the landside has two functions; first of all the leading edge of the first and second parts acts like a knife in order to apply a cutting or slicing action on the soil; and secondly the second part which extends rearwardly towards the upper region of the mouldboard is shaped to apply lateral movement to a first portion of furrow slice (straw, stubble and an upper layer of soil only) and which deposits this first slice portion in to the furrow before the main furrow slice is completely turned over by the mouldboard. This means that manure, straw and trash can be buried by the first slice portion before the main furrow slice is deposited.

This forward portion of the landside therefore provides, by simple means, a replacement of the function previously provided by known use of disc coulter, a coulter knife, a skimmer or a trashboard, so that such additional components are no longer required.

The second part which extends rearwardly towards the upper region of the mouldboard is shaped to apply lateral movement to a furrow slice, as referred to above, and therefore may function in the manner of a portion of a mouldboard or a skimmer.

The disadvantage of a disc coulter, or skimmer or trashboard are that their locations are such that they can interfere with the passage of soil, straw and trash. If there is much straw left on the field, then it is likely to build-up on these additional parts, when they are provided on known arrangements, and therefore clog the passage for the soil completely. When this does arise with existing arrangements, the driver has to stop and take away the blocking or clogging material. There is also a risk of material building-up on the plough beams.

The advantage of the arrangement of the rearward portion of the landside of the invention is that it terminates at or close to the lower end of the saddle, and therefore there is no significant rearward projection from the plough beam, (which obtains with existing designs), in which the rearward projection takes-up space between the trailing end of one plough body assembly and the leading end of a following plough body assembly. This rearward projection in know arrangements interferes with smooth passage of material laterally through the space between successive plough bodies, but is avoided in the novel rearward arrangement in the landside of the invention, in that it terminates at or close to the lower end of the plough beam.

The invention may be applied to any type of plough frame having a plurality of plough body assemblies mounted thereon, and including fully mounted ploughs, semi-mounted ploughs, and reversible ploughs.

A preferred embodiment of plough body assembly according to the invention will now be described in detail, by way of example only, with reference to the accompanying illustrations, in which:
Figure 1 is a perspective view from the "landside" side of a plough body assembly;
Figure 2 is a similar view from the same side as that of Figure 1, but at a different angle to illustrate the shape of the mouldboard and of the forward end of the landside;
Figure 3 is a side view of the plough body assembly, again from the landside side thereof;
Figure 4 is a perspective view from the front and from the opposite side of the plough body assembly;
Figure 5 is a front view of the plough body assembly;
Figure 6 is a perspective illustration from the front of a detachable landside and point, forming a unit adapted to be mounted on the plough body assembly; and,
Figure 7 is a perspective illustration, partly in plan, of the landside unit shown in Figure 6.

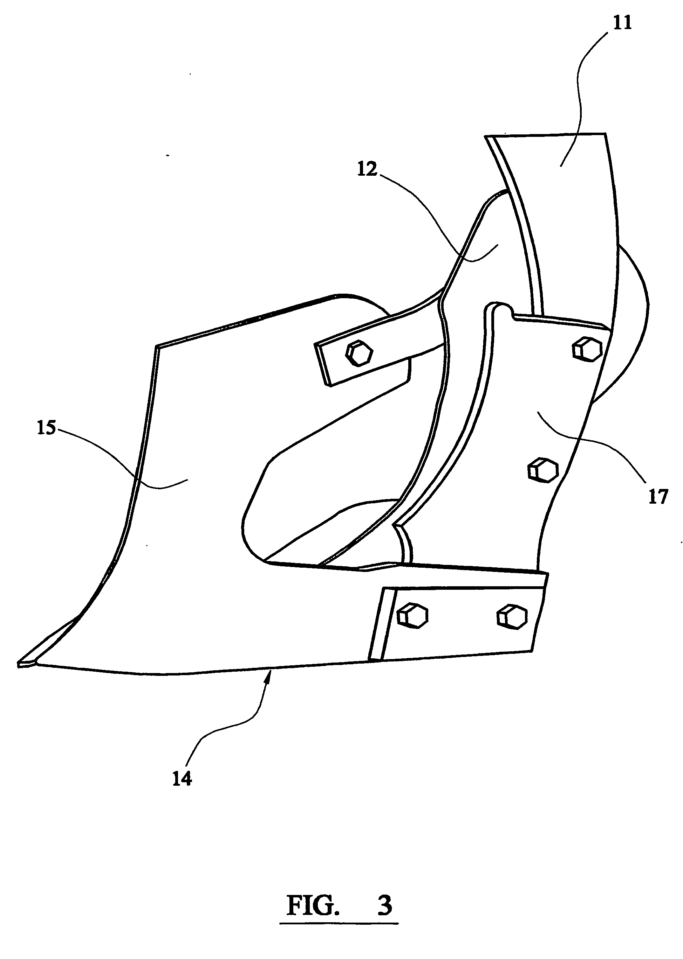

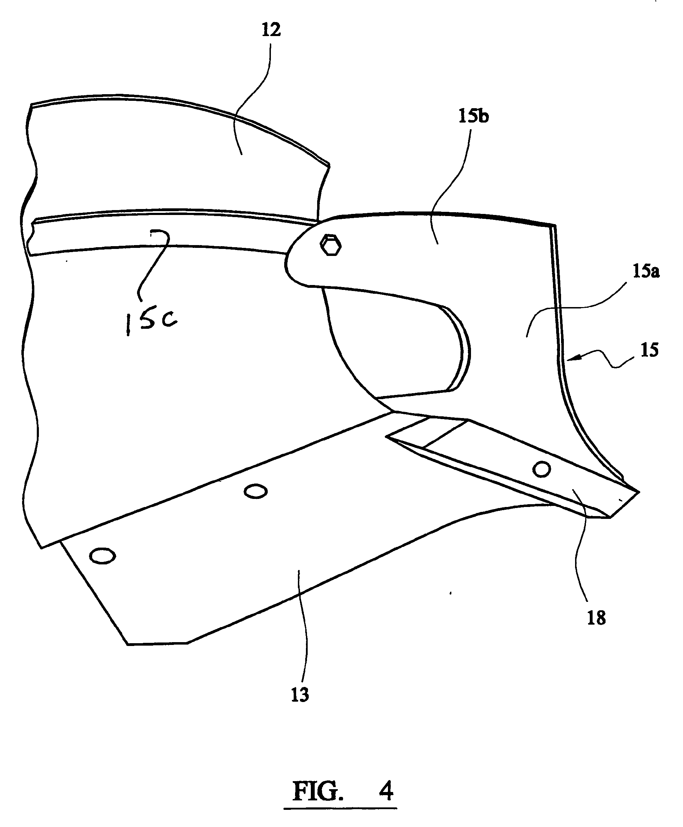

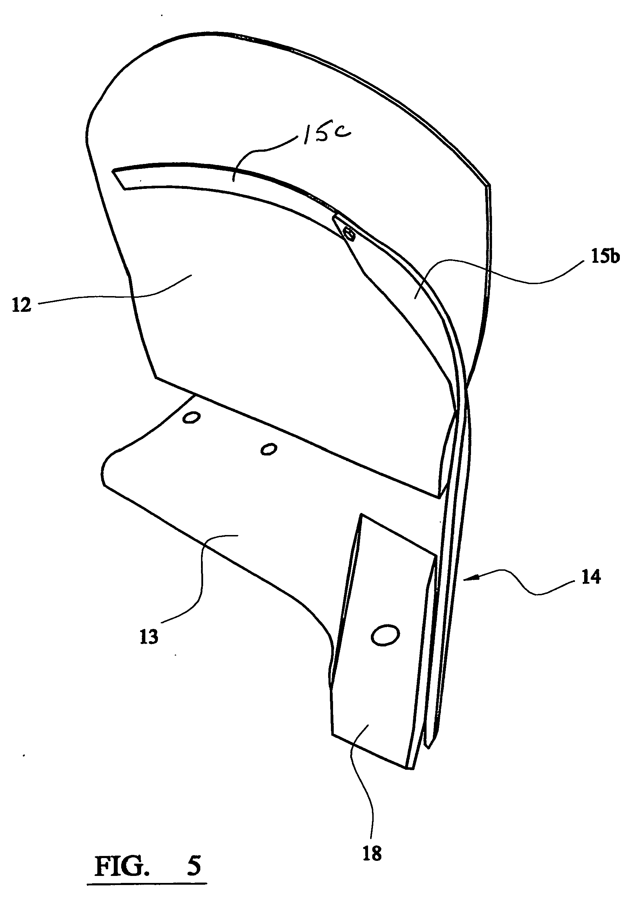

Referring now to the Figures, a plough body assembly according to the invention is designated generally by reference 10, and is intended to be mounted on a plough frame carrying a plurality of such plough body assemblies. The assembly comprises a plough beam 11 which serves to mount the assembly 10 on a plough frame (not shown), and a mouldboard 12 is mounted on the plough beam 11 via a saddle 17. The mouldboard 12 has a usual share 13 mounted thereon, as shown more clearly in Figure 4. Finally, the assembly is completed by a landside, designated generally by reference 14, and which is also mounted on the plough beam 11 (via the saddle 17), and operative to stabilise or position the plough body assembly during ploughing.

The landside 14 has a forward portion 15 which projects forwardly of the share 13, and a rearward portion 16 which extends rearwardly of the forward portion 15, and which takes the form of a flat strip which is mounted at its rear end on the lower end of the plough beam 11.

The assembly 10 also includes the saddle 17 which mounts the mouldboard 12 on the plough beam 11, and which also serves to mount the landside 14 on the plough beam 11.

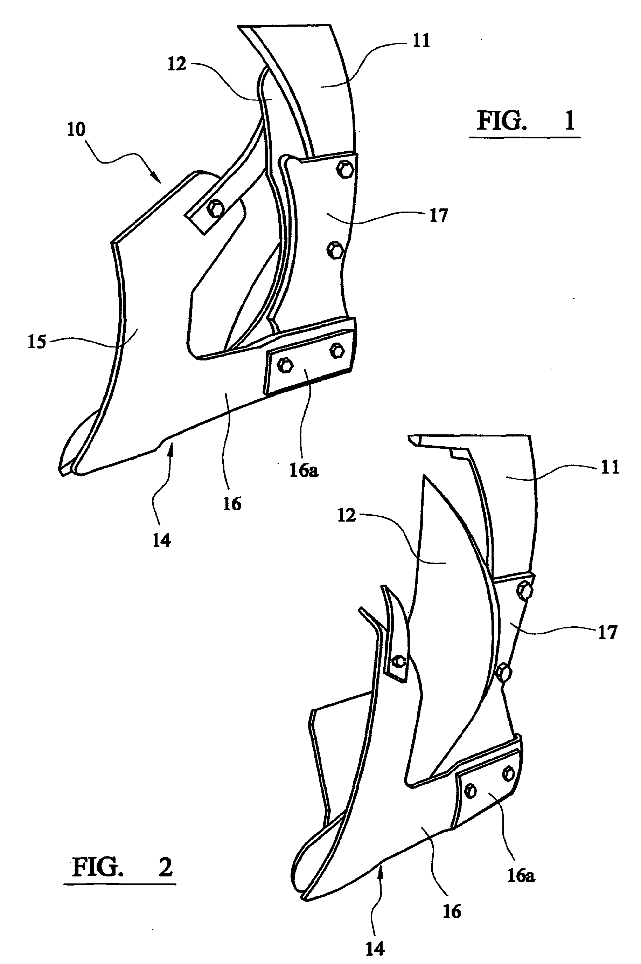

The forward portion 15 of the landside 14 has a first part 15a which comprises a blade which extends upwardly of the share 13, as shown in Figure 4, and a second part 15b which is connected to the upper end of the first part 15a, and which extends rearwardly towards the mouldboard 12. The second part 15b is shaped, so as to curve inwardly, as can be seen from Figures 1, 2 and 4, and therefore can function in the manner of a mouldboard or a skimmer, as will be described in more detail below.

The rearward portion 16 terminates in a rear end 16a which is mounted on a lower end of the plough beam 11 via the saddle 17.

During operation of the plough body assembly, a furrow is formed in the ground and there is also formed a turned-over furrow slice by the action of the share 13 and the mouldboard 12. However, in addition, the ploughing operation is improved by the way in which the improved landside 14 of the invention operates. In particular, the forward portion 15 of the landside 14 has two functions. First of all, the leading edge of the first and second parts 15a, 15b acts like a knife in order to apply a cutting or slicing action on the soil. Secondly, the trailing end of the second part 15b is shaped to apply lateral movement to a furrow slice and which deposits this slice into the furrow before the main furrow slice is completely turned-over by the mouldboard 12.

This means that manure, straw and trash which may be present can be buried by the first slice before the main furrow slice is deposited.

The forward portion 15 of the landside 14 therefore provides, by simple means, a replacement of the functions previously provided by using a disc coulter, a coulter knife, a skimmer or a trashboard, so that such additional components are no longer required. The disadvantages of existing use of disc coulter, skimmer, trash board etc are that their locations are such that they can interfere with the passage of soil, straw and trash. If there is much straw left on the field, then it is likely to build-up on the additional components in existing arrangements (disc coulter, skimmer and trash board etc), and this clogs or blocks passage for the soil completely. When this occurs, the driver has to stop and take away the blocking material. There is also a risk of such material building-up on the plough beams.

The advantage of the arrangement of the rearward part 16 of the landside 14 is that it terminates rearwardly at or close to the lower end of the plough beam 11 (saddle 17), and therefore there is no significant rearward projection from the plough beam, as is obtained with existing designs, in which the rearward projection takes-up space between the trailing end of one plough body assembly and the leading end of a following plough body assembly.

This rearward projection in known arrangements interferes with smooth passage of material laterally through the space between successive plough bodies, but is avoided in the novel rearward arrangement in the landside of the invention.

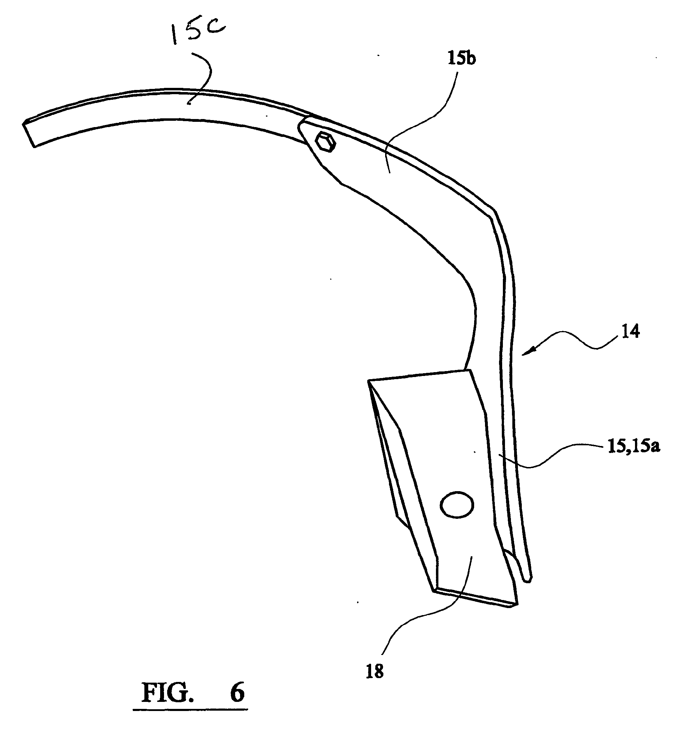

A preferred additional feature of the landside 14 comprises a straw guide in the form of a curved guide strip 15c (see Figures 4, 5 and 6 in particular) which is secured to a trailing end of the second part or "wing" 15b via a single bolt, and which provides an additional advantage, when there is an excessive burden of straw remaining a field being ploughed. This extension (15c) of the wing 15b has been found to be very effective in burying such straw into the furrow, and before the furrow slice is turned over.

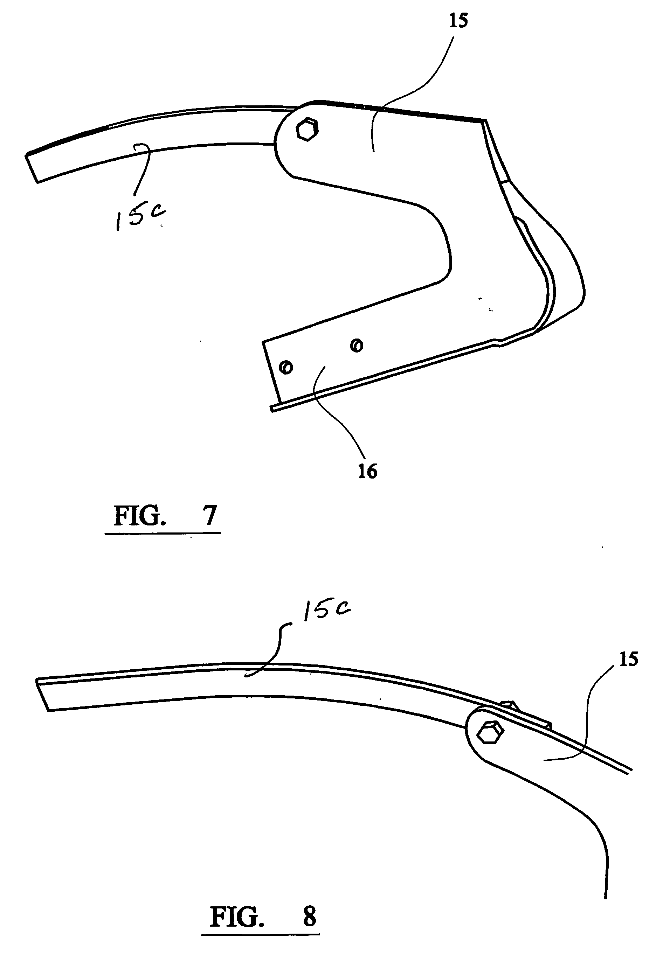

Figures 1 to 5 illustrate the entire plough body assembly 10, and Figures 6 and 7 illustrate the landside unit, and of which a reversible point 18 forms a component part also. The landside unit therefore can be readily mounted on the plough body assembly, by mounting of the forward end of the landside on the share 13, via the point 18, and by the rearward mounting of the rear end 16a of the second part 16 on the saddle 17.

The plough body assembly illustrated may be mounted on any multi-plough body arrangement on a plough frame, and including fully mounted ploughs, semi-mounted ploughs, and reversible ploughs.

In the illustrated embodiment, the forward end of the landside is provided with a 2-part upwardly extending blade, and which has a first part which extends upwardly of the share and which is operative to form a portion of a furrow slice, and a second part which is connected to the upper end of the first part and which extends rearwardly towards the mouldboard. Further, the second part is shaped to direct the furrow slice portion formed by the first part laterally to be deposited in the furrow before the remainder of the furrow slice is deposited in the furrow by the mouldboard.

However, it should be understood that the claimed invention includes other variants, whereby an upwardly extending blade can be mounted on the plough body assembly forwardly of the mouldboard. In one preferred arrangement (not shown), the blade may be mounted on a forward portion of the mouldboard, or on the share. Alternatively, the blade may be mounted on any other suitable part of the structure of the plough body assembly, provided that it is located forwardly of the mouldboard. e.g. on the structure between the point 18 and the share 13.

## Claims

1. A plough body assembly (10) which comprises:
a plough beam (11) for mounting the assembly on a plough frame ;
a mouldboard (12) mounted on the plough beam (11) via a saddle (17);
a share (13) mounted on the mouldboard (12); and,
a landside (14) mounted on the plough beam (11), also via the saddle (17), and operative to stabilise or position the plough body assembly during ploughing;
a two-part blade mounted on the landside (14) and formed by a forward portion (15) which projects forwardly of the share (13), and a rearward portion (16) which extends rearwardly of the forward portion (15), in which the forward portion (15) has a first part (15a) which extends upwardly of the share (13), and a second part (15b) which is connected to the upper end of the first part (15a) and which extends rearwardly towards the mouldboard (12):
**characterised in that** the rearward portion (16) of the blade terminates in a rear end (16a) which is mounted on a lower end of the saddle (17).

2. A plough body assembly according to claim 1, in which the second part (15b) of the forward portion (15) of the landside (14) is shaped so as to perform the function of a mouldboard, or a skimmer.

3. A plough body assembly according to claim 1 or 2, in which the second part (15b) of the landside (14) forms a trailing wing, and a straw guide (15c) is secured to the trailing end of the wing (15b).

4. A plough body assembly according to claim 3, in which the straw guide (15c) comprises a curved guide strip.

5. A plough body assembly according to any one of the preceding claims, and mounted on a plough frame of a multi-plough body assembly plough.

6. A plough body assembly according to claim 4, in which the plough frame is incorporated in a fully mounted plough, a semi-mounted plough and / or a reversible plough.

## Patentansprüche

1. Pflugkörperbaugruppe (10), umfassend:
einen Pflugbaum (11) zum Anbringen der Baugruppe an einem Pfluggestell;
ein Streichblech (12), das über einen Sattel (17) an dem Pflugbaum (11) angebracht ist;
eine Pflugschar (13), die an dem Streichblech (12) angebracht ist; und
eine Anlage (14), die ebenfalls über den Sattel (17) an dem Pflugbaum (11) angebracht ist und zum Stabilisieren oder Positionieren der Pflugkörperbaugruppe beim Pflügen betriebsfähig ist;
ein zweiteiliges Blatt, das an der Anlage (14) angebracht ist und durch einen vorderen Abschnitt (15), welcher von der Pflugschar (13) nach vorn vorragt, und einen rückwärtigen Abschnitt (16), welcher von dem vorderen Abschnitt (15) nach hinten verläuft, ausgebildet ist, wobei der vordere Abschnitt (15) ein erstes Teil (15a), das von der Pflugschar (13) nach oben verläuft, und ein zweites Teil (15b) aufweist, das mit dem oberen Ende des ersten Teils (15a) verbunden ist und nach hinten zum Streichblech (12) hin verläuft;
**dadurch gekennzeichnet, dass** der rückwärtige Abschnitt (16) des Blatts in einem rückwärtigen Ende (16a) endet, das an einem unteren Ende des Sattels (17) angebracht ist.

2. Pflugkörperbaugruppe nach Anspruch 1, wobei das zweite Teil (15b) des vorderen Abschnitts (15) der Anlage (14) derart geformt ist, dass es die Funktion eines Streichblechs oder eines Schälers erfüllt.

3. Pflugkörperbaugruppe nach einem der Ansprüche 1 oder 2, wobei das zweite Teil (15b) der Anlage (14) einen nachschleppenden Flügel ausbildet und eine Strohführung (15c) am nachschleppenden Ende des Flügels (15b) befestigt ist.

4. Pflugkörperbaugruppe nach Anspruch 3, wobei die Strohführung (15c) einen gekrümmten Führungsstreifen umfasst.

5. Pflugkörperbaugruppe nach einem der vorhergehenden Ansprüche, die an einem Pfluggestell eines Mehrfachpflugkörperbaugruppenpflugs angebracht ist.

6. Pflugkörperbaugruppe nach Anspruch 4, wobei das Pfluggestell in einem Anbaupflug, einem Aufsattelpflug und/oder einem Drehpflug angebracht ist.

## Revendications

1. Ensemble de corps de labour (10) comprenant :
- une poutre de charrue (11) pour le montage de l'ensemble sur un châssis de charrue ;
- un versoir (12) monté sur la poutre de charrue (11) par l'intermédiaire d'une selle (17) ;
- un soc (13) monté sur le versoir (12) ;
- un contre-sep (14) monté sur la poutre de charrue (11) également par l'intermédiaire de la selle (17) et opérationnel pour stabiliser ou positionner l'ensemble de corps de labour pendant le labourage ;
- une lame en deux parties montée sur le contre-sep (14) et formée par une portion avant (15) qui fait saillie vers l'avant du socle (13), et une portion arrière (16) qui s'étend vers l'arrière à partir de la portion avant (15), dans lequel la portion avant (15) a une première partie (15a) qui s'étend vers le haut à partir du soc (13), et une seconde partie (15b) qui est reliée à l'extrémité supérieure de la première partie (15a) et qui s'étend vers l'arrière en direction du versoir (12) :
**caractérisé en que** la portion arrière (16) de la lame se termine à une extrémité arrière (16a) qui est montée sur une extrémité inférieure de la selle (17).

2. Ensemble de corps de labour selon la revendication 1, dans lequel la deuxième partie (15b) de la portion avant (15) du contre-sep (14) est formée de façon à accomplir la fonction d'un versoir ou d'un découpeur.

3. Ensemble de corps de labour selon la revendication 1 ou 2, dans lequel la seconde partie (15b) du contre-sep (14) forme une aile de traînée et un guide paille (15c) est fixé sur l'extrémité de traînée de l'aile (15b).

4. Ensemble de corps de labour selon la revendication 3, dans lequel le guide paille (15c) comprend une bande de guidage courbe.

5. Ensemble de corps de labour selon l'une quelconque des revendications précédentes, monté sur un cadre de charrue d'une charrue à plusieurs ensembles de corps de charrue.

6. Ensemble de corps de labour selon la revendication 4, dans lequel le châssis de charrue est incorporé dans une charrue portée, une charrue semi portée et/ou une charrue réversible.
